# EUROPEAN PATENT SPECIFICATION

(11) **EP 0 452 581 B1**
(45) Date of publication and mention of the grant of the patent: **31.07.2002**
(21) Application number: 90304269.5
(22) Date of filing: 20.04.1990
(51) Int. Cl.: H01F 41/02, B29C 47/20

(54) **Dies for extrusion moulding**
Matrize zum Strangpressen
Matrices pour moulage par extrusion

(43) Date of publication of application: 23.10.1991
(73) Proprietor: SEIKO EPSON CORPORATION, Shinjuku-ku Tokyo (JP)
(72) Inventor: Ikuma, Ken, Room 101 Mezon Shandoro, Suwa-Shi, Nagano-Ken (JP); Akioka, Koji, Room 336 Kanazawaseiwa-so, Chino-Shi, Nagano-Ken (JP); Sakata, Masaaki, Room 401 Kanazawaseiwa-so, Chino-Shi, Nagano-Ken (JP); Shimoda, Tatsuya, Suwa-Gun, Nagano-Ken (JP)
(74) Representative: Sturt, Clifford Mark

(56) References cited:
- EP-A- 0 149 335
- EP-A- 0 191 130
- FR-A- 1 169 708
- GB-A- 1 177 454
- PATENT ABSTRACTS OF JAPAN vol. 12, no. 343 (M-741)(3190) 14 September 1988, & JP-A-63 102918 (NIPPON YUNIKAA K.K.)
- PATENT ABSTRACTS OF JAPAN vol. 11, no. 209 (E-521)(2656) 07 July 1987, & JP-A-62 30305 (KANEGAFUCHI CHEM IND CO LTD)

## Description

This invention relates to dies for the extrusion moulding of resin bonded magnets.

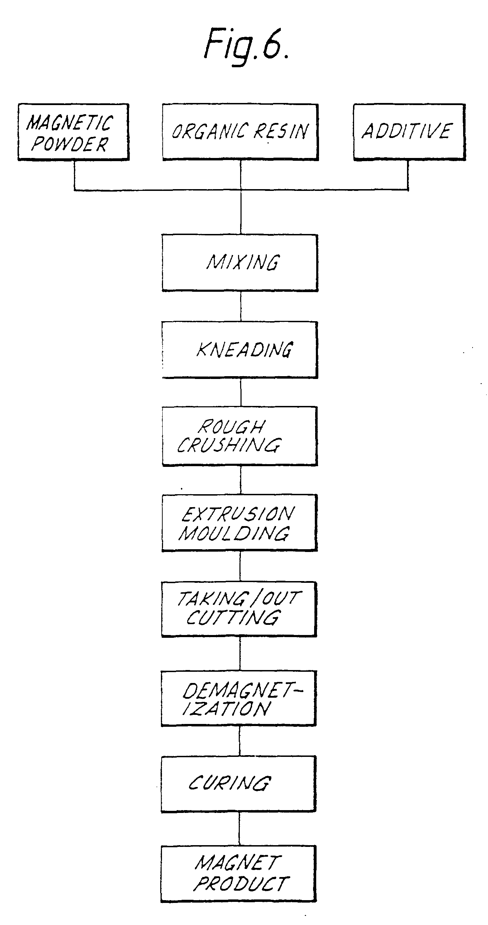

In general, a resin bound type magnet is produced by a process shown in figure 6, i.e:

A magnetic powder and an organic resin (thermosetting or thermoplastic resin) of suitable particle sizes are sufficiently mixed. If necessary, additives are added. The mixed raw materials are kneaded by a kneading machine such as a roller mill or an extrusion kneader, etc. with heating above a temperature at which the organic resin is molten. The kneaded raw material is roughly crushed into particles having particle sizes of around 1-10mm, and is charged into an extrusion moulding machine.

The charged magnetic raw material is heated in the extrusion moulding machine to fluidise it, and is sent into a die equipped at a front end of a cylinder by a screw or plunger.

The magnet raw material is moulded in a predetermined shape such as cylinder, thin plate, bar, etc. by passing through the said die. However, the moulding processes of an isotropic magnet and an anisotropic magnet are different.

Namely, in the case of an anisotropic magnet, the magnetic powder is orientated, by passing the magnetic raw material through a die in which a magnetic field is generated, and the magnet is moulded. In the process, it is common to generate the magnetic field by a combination of an electromagnetic coil and a magnetic circuit comprising a magnetic material.

On the other hand, the isotropic magnet is moulded by extrusion without a magnetic field. The moulded body is cooled near the outlet of the front end of the die, then it is picked up by a receiving machine located in front of the extrusion moulding machine, and it is cut into a suitable length by a cutter.

Because the magnetism remains in the moulded body in case of the moulding with an orientation of the magnetic powder, it is subjected to a demagnetisation to remove it. Further in the case that the thermosetting resin is used as a binder, the moulded body is subjected to a curing process to cure the resin after its demagnetisation, and a resin bound type magnet is produced by extrusion moulding.

In these production methods, the die, which is used for an extrusion moulding in a magnetic field (ie. for a moulding of the anisotropic magnet), has a structure which is combination of a magnetic material and a non-magnetic material, such as those disclosed in Japan Patent Laid-Open Sho 58-219705, Japan Patent Laid-Open Sho 60-100413 and other documents.

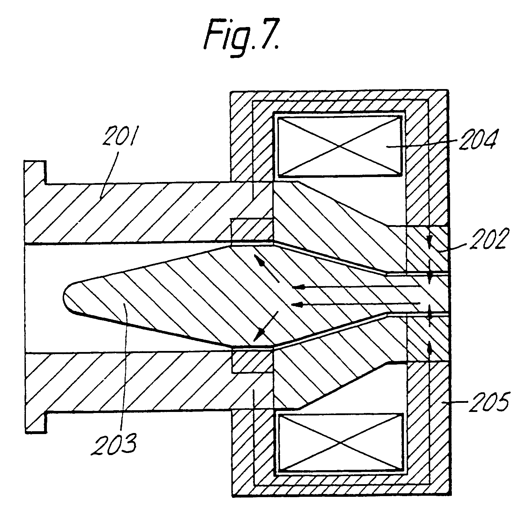

For example, in the Japan Patent Laid-Open Sho 58-219705, a die structure shown in figure 7 is disclosed.

In the die of figure 7, a raw material injection outer die 201, a mandrel 203 and a front end of the moulding section outer die 202 comprise magnetic materials and the rest of the moulding section outer die 202 comprises a non-magnetic material. An electromagnetic coil 204 is coiled around the moulding section outer die 202, and a block of magnetic material 205 is positioned around the electromagnetic coil 204.

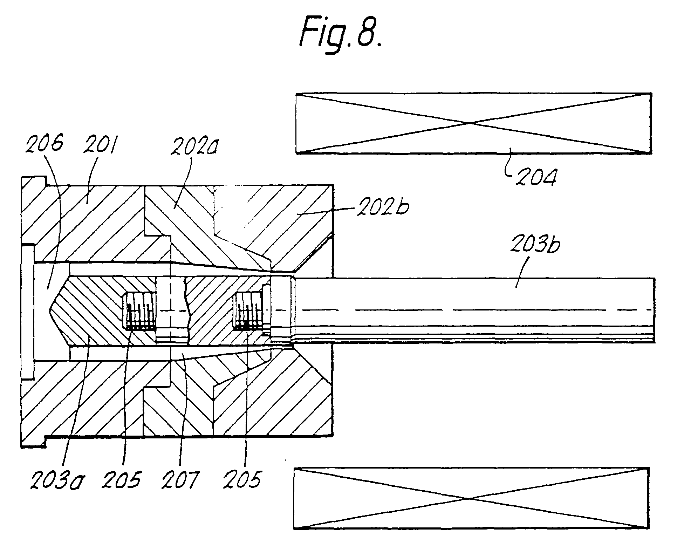

The inventor of this application also disclosed a die structure as shown in figure 8 of Japan Patent Laid-Open Sho 63-254713.

The die comprises an outer die comprising a raw material injection outer die 201 and moulding section outer dies 202a and 202b, and mandrels 203a and 203b. The raw material injection outer die 201 consists of a non-magnetic material, and the moulding section outer die 202a also consists of a non-magnetic material, but is equipped with the moulding section outer die 202b made of a magnetic material to induce a magnetic flux at the front end of the outer die.

The mandrel 203a also consists of a non-magnetic material, and at its front end of the mandrel, the mandrel 203b made of a magnetic material is provided.

The electromagnetic coil 204 is installed at the outside of the die. When a current is passed through the electromagnetic coil 204, a magnetic field is generated at a space (hereinafter called an orientation section) between the front end of the mandrel 203b and the front end of the moulding section outer die 202b because the generated magnetic flux tends to pass through a magnetic material with a high magnetic permeability.

Raw material for a magnet passes through the raw material injection section 206 and a raw material packing space 207 and is moulded in a cylindrical form by extrusion with the magnet powder oriented in the orientation section.

Today, (1) a press moulding, (2) an injection moulding and (3) an extrusion moulding are available for a resin bound type radial magnet.

Among them, press moulding and injection moulding are currently utilised for mass-production processes. In contrast, although extrusion moulding is widely used for a moulding of ferrite magnets, it is still not at a stage to be utilised in a mass-production of high performance rare earth magnets, and the die for the extrusion moulding, especially the structure of the orientation section in the die has not been sufficiently considered.

Patent Abstracts of Japan Vol. 12 No. 277 (E-640) (3124) 30th July 1988 JP-A-63 055922 discloses a metallic die for extrusion of cylindrical resin bonded magnets. A radial closing magnetic channel is formed in the die by means of inducing magnetic induction flux from an outer electromagnetic coil using a non-magnetic forming outer die fitted with a ring type magnetic part on the end thereof and a magnetic inner die fitted with a non-magnetic part on the end thereof. The arrangement is thus effectively a die with an orientation section comprising a magnetic part sandwiched between two non-magnetic parts. The benefit of the arrangement is to avoid cooling of the electromagnetic coil.

Patent Abstracts of Japan Vol. 12, No. 162, (E-609) 17th May 1988 JP-A-62273708 describes a die for the extrusion moulding of a resin bonded magnet in which a molten mixture of a magnetic powder and a resin is solidified with cooling in a forming and solidification with cooling part during a moulding process, said forming and solidification with cooling part being located at the front end of the die.

Patent Abstracts of Japan Vol. 12 No. 343 (M-741) (3190) 14 September 1988 JP-A-63-102918 discloses a die for moulding a resin cylinder, in which sintered zirconia lines part of an extrusion aperture formed between an outer and inner die.

It is important to have a sufficient consideration on the structure of the orientation section of a die for the extrusion moulding because it largely influences a magnetic performance of the moulded magnet.

In either the die or the machine of the extrusion moulding for a resin bound type magnet, conventionally used, no attention has been paid to the material and the structure of the orientation section of the die, and it was generally made by a single body of a magnetic material. Therefore it has the problems listed below.

Namely, in the case that a resin bound type magnet is moulded by extrusion, a magnetic field is generated, when a mixture comprising a magnetic powder and thermosetting or thermoplastic resin becomes molten due to heating, to orientate the magnetic powder, and it is necessary to carry out a solidification by cooling after the moulding in the orientation section so as not to disorder the orientation and or deform (disorder) the moulded shape.

In order to achieve a sufficient orientation of the magnetic powder, it is preferable that a viscosity of the resin should be as low as possible as soon as it enters the orientation section, i.e. its temperature should be as high as possible. In contrast, when the orientated and moulded magnet comes out from the die, it is preferable that its temperature is as low as possible to get sufficient solidification by cooling in the orientation section so as not to disorder the orientation and the moulded shape.

Accordingly a temperature gradient is required in the orientation section. If the temperature gradient is not sufficient in the orientation section for the solidification by cooling and the temperature of the whole orientation section drops, it results in an insufficient orientation, and conversely if the temperature of the whole orientation section rises, the orientation and the moulded shape are disordered when the magnet comes out from the die.

However, in the case that the orientation section comprises a single body of a magnetic material, it is difficult to create the temperature gradient because of the property of the material and the structure of the orientation section, and in order to create the temperature gradient in the single metal body, it is necessary to use a heater and a cooler with a high capacity resulting in extreme inefficiency.

Further, in case of a radially oriented cylindrical magnet (hereinafter called as a radial anisotropic magnet), the sufficiency of its radial anisotropic property depends on the shape and size of the magnet. As an index to show the above, a radial factor fR is given by the following equation.${\text{fR = 2 Dh/d}}^{\text{2}}$ where
- D =: Outer diameter of a ring shaped moulded magnet
- h =: Height of a ring shaped moulded magnet
and the radial factor can be classified into following categories.$\text{fR < 1 Sufficient radial anisotropy achievable}$$\text{fR = 1-2 Insufficient # #}$$\text{fR > 1 Isotropic}$

The fR is the first index to consider in designing a die when a radial magnetic field moulding by pressing or injection is practised.

Namely, if the die structure satisfies fR < 1, a sufficient radial magnetic field can be generated at a cavity and thus it is possible to mould a magnet with a sufficient radial anisotropic property.

However when a die of fR ≧ 1 is designed, it is not possible to mould a magnet with a sufficient radial orientation.

Therefore there is an important index for the designing of a die for a radial magnetic field moulding by pressing or injection moulding.

However in case of an extrusion moulding, since the shape of the moulded magnet and the die for the extrusion moulding do not coincide it is difficult to use fR as an index for designing a die for extrusion moulding.

As described above, when a resin bound type magnet is moulded by an extrusion, a mixture of a magnetic powder and a thermosetting or a thermoplastic resin is heated, a magnetic powder is orientated by a magnetic field as it becomes molten, and a solidification by cooling after the moulding should be performed in the orientation section so as not to disorder the orientation and the moulded shape.

In order to achieve a sufficient orientation of the magnetic powder, the temperature gradient in the orientation section is required as described above. To get the temperature gradient in the orientation section, there are the methods listed below.
(1) Increasing the length of the orientation section,
(2) Inserting a material with a low thermal conductivity into the orientation section and
(3) Heating and cooling of both ends of the orientation section with extremely strong heater and cooler.

Among them, as to (1) the length of the orientation section, there is a limitation of the length of the orientation section because of an impossibility of a sufficient orientation magnetic field if it becomes too long, and as to (2), a material of low thermal conductivity is in general a non-magnetic material, and thus the magnetic field in the orientation section is disordered unless the material inserted is thin.

Accordingly both of (1) and (2), though it may be possible to attain the temperature gradient with a reduction of the capacities of the heater and the cooler, still require a strong heater and cooler to get the temperature gradient as same to (3) in a certain degree.

However if a strong heater with an additional capacity is used, not only the orientation section, but also the whole of the die is heated resulting in a temperature elevation of the whole of the die except for the front end of the die. Therefore a compound, which is heated to have a fluidity in the extrusion machine, is further heated in the die, in case that a resin in the compound is a thermosetting resin, it starts to cure in the die, and in case of a thermoplastic resin, a thermal decomposition is initiated resulting in changes with time such as an increase of viscosity of the compound while it is in the extrusion moulding process, etc. This leads to a problem that stable operation of the extrusion moulding over a long period of time is not achieved.

This invention aims to solve the problems of the die for an extrusion moulding of a resin bound type magnet as discussed above, and to provide a die for the extrusion moulding to mould a resin bound type magnet with a high performance and a superior shape accuracy.

Further, this invention provides a die for an extrusion moulding to produce a high performance resin bound type radial magnet and to produce a long size radial magnet which does not satisfy fR < 1.

Furthermore, this invention aims to provide a die for an extrusion moulding, in which an extrusion moulding which is stable over a long period of time can be made by preventing the change of resin and magnetic powder with time during the extrusion process and by stabilising the magnetic performance of a magnet to be moulded, the die having a superior mass production capability as well.

According to one aspect of the present invention there is provided a die for the extrusion moulding of a resin bonded magnet in which a molten mixture of a magnetic powder and a resin is solidified with cooling, in which a magnetic powder is orientated by a magnetic field applied in a layered orientation section during a moulding process, said orientation section being located at a front end of the die, and comprising a layer of magnetic material, characterised in that: the orientation section comprises at least an outer layer, a central layer and an inner layer; the central layer has a thermal conductivity lower than the thermal conductivity of the outer layer and the inner layer; the central layer has a thermal conductivity at 293K of 4.2W/mK or less; the outer layer comprises a magnetic material; and the inner layer comprises a magnetic material.

Beneficially, the said central layer comprises a non-magnetic material having an operative length which is half or less of the said operative length of the orientation section.

Preferably, the die is configured to produce cylindrical resin bound type magnets.

Advantageously, the die has a passage for the said molten mixture in the orientation section which passage has an inner diameter and an outer diameter and wherein the operative length of the orientation section is less than the square of the inner diameter divided by twice the outer diameter.

It is preferred that the said central layer comprises a non-magnetic material and that the die has a passage for the said molten mixture in the orientation section which passage has an inner diameter and an outer diameter and wherein the operative length of the orientation section excluding the non-magnetic material is less than the square of the inner diameter divided by twice the outer diameter.

According to another aspect of the present invention there is provided a die for the extrusion moulding of a resin bonded magnet in which a molten mixture of a magnetic powder and a resin is solidified with cooling, in which a magnetic powder is orientated by a magnetic field applied in a layered orientation section during a moulding process, said orientation section being located at a front end of the die, and comprising a layer of magnetic material, characterised in that: the orientation section comprises at least an outer layer and an inner layer; the inner layer has a thermal conductivity lower than the thermal conductivity of the layer; the inner layer has a thermal conductivity at 293K of 4.2W/mK or less; and the outer layer comprises a magnetic material.

Embodiments of the present invention will now be described by way of example only and with reference to the accompanying drawings, in which:-
Figures 1-3 show outline drawings of dies for an extrusion moulding used in Examples of this invention.
Figure 4 shows a graph to exhibit a viscosity change of the compound by time.
Figures 5(a) and (b) show graphs to exhibit a change of the magnetic performance when a die of Example 6 is used.
Figure 6 is a process outline of a magnet.
Figure 7 and 8 are outline drawings of dies for the conventional extrusion moulding.

This invention has the effect of improving the performance of the moulded magnet and also reforming the dimensional accuracy as is clear from the aftermentioned Examples as a result of formation of a temperature gradient in the orientation section, by forming a layer structure from at least two different materials and by making at least one or more of materials of the said orientation section with magnetic materials, which extends from the front end of the die at which the orientation of a magnetic powder starts to an outlet section of the die for an extrusion moulding of a resin bound type magnet which is moulded by orientating a molten mixture of a magnetic powder and a resin, and by a solidification with cooling.

Also in this invention, as one alternative case of the layer structure in the orientation section, when a material with a low thermal conductivity having the thermal conductivity K (293K(20°C)) of K ≦ 4.2W/mK (0.01 [cal/cm·sec·°C]) is inserted, the thermal conductivity at the insertion section drops approximately 1/10 or less because a material generally used for the die has the thermal conductivity of approximately 29.4 - 33.6W/mK (0.07-0.08 [cal/cm·sec·°C]).

If a heat passing through the orientation section is constant, a temperature difference is able to be attained by the below listed equation by reducing the thermal conductivity.${\text{Q = A·K (T}}_{\text{1}} {\text{- T}}_{\text{2}} \text{)/} \text{1}$ Q: heat capacity, A: area, *1*: thickness
T₁ - T₂ = ΔT: temperature difference

Further, in the case that the insertion material in the orientation section comprises a non-magnetic material, the magnetic performance remarkably deteriorates if it is 1/2 or more of the length of the orientation section, in spite of a high temperature difference. This was due to a disorder of the magnetic field in the orientation section by insertion of a non-magnetic material in the orientation section. Although the temperature difference drops when a non-magnetic layer becomes thin, the magnetic performance is somewhat improved because of a reduction of the disorder of the magnetic field in the orientation section. Therefore it is preferable that the thickness of the non-magnetic layer is as thin as possible to take a sufficient temperature gradient, and when a non-magnetic material is inserted, it is preferable that its length is 1/2 or less of the length of the orientation section.

Moreover, when the contact section length 1 of the orientation section of the die for an extrusion with the molten mixture is limited to 1 < d² < 2D, the magnetic performance is improved because of an availability of a sufficient orientation of the magnetic powder.

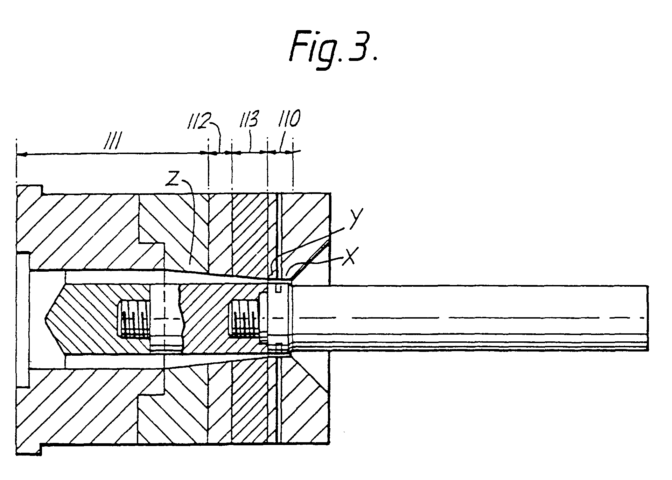

Further, by arranging the composition of the die structure from the connecting section of an extrusion machine to the outlet of the orientation section in order of a converging section, a heat insulating section, a heating section and an orientating section, it is possible to operate a stable extrusion moulding over a long time resulting in effects such as a suitability for a mass production, etc.
(1) It is possible to create a temperature gradient in the orientation section by forming a layer structure for the orientation section, and therefore the degree of the orientation of a magnet is improved and the dimensional accuracy is also improved.
(2) It is possible to create a further high temperature gradient in the orientation section, by inserting a magnetic material having a thermal conductivity of 4.2W/mK (0.01 [cal/cm·sec·°C]) or less or a non-magnetic material which has a thermal conductivity of 4.2W/mK (0.01 [cal/cm sec°C]) or less having a length not more than 1/2 of the length of the orientation section, into a partial section of the orientation section, and therefore it is possible to mould a high performance anisotropic resin bound type magnet by an extrusion moulding.
(3) In case that a non-magnetic material is not present in the orientation section, by making the length *1* of the orientation section$\text{1} {\text{< d}}^{\text{2}} \text{/ (2D)}$ and in case that a non-magnetic material is present, by making the length *1*'$\text{1} {\text{' < d}}^{\text{2}} \text{/ (2D)}$ it is possible to mould a high performance resin bound type radial magnet with a sufficient radial orientation and to achieve prolongation of this magnet.
(4) By constituting a structure of the die, as shown in Figure 3, in order from a connecting section of an extrusion machine as a converging section, a heat insulating section, a heating section and an orientating section, it is possible to operate an extrusion moulding with a stable magnetic performance for a long time, and a stable mass production is achievable.

This invention is hereafter explained by using Examples.

### EXAMPLE 1

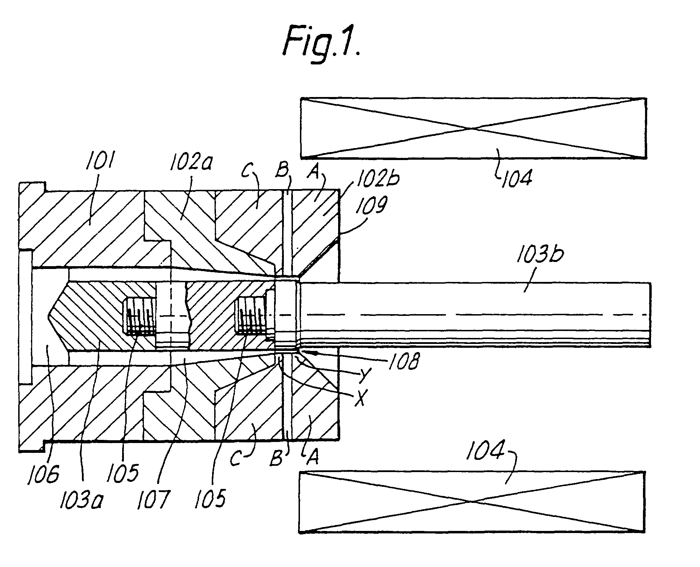

Figure 1 shows an outline drawing of a die for an extrusion moulding used in Example 1.

In the Figure, 108 is the orientation section, 109 is a surface of the outlet of the orientation section, X and Y are temperature measurement points, and an explanation of other numbers is omitted because they are described in below.

A die for an extrusion moulding is constituted, as shown in Figure 1 by an outer die comprising a raw material injection outer die 101 and moulding section outer dies 102a and 102b, and mandrels 103a and 103b, the raw material injection outer die 101 and the moulding section outer die 102a are composed of non-magnetic materials, and the moulding section outer die 102b of a magnetic material is equipped at the front end of the outer die to induce a magnetic flux. Further the mandrel 103a comprises a non-magnetic material, and at its front end the mandrel 103b consisting of a magnetic material is equipped by a connection screw 105.

Further an electromagnetic coil 104 is installed at the outside of the die, and when a current passes through the electromagnetic coil, a magnetic field is generated at the orientation section 108 between the front end of the mandrel 103b and the front end of the moulding section outer die 102b because the generated magnetic flux tends to pass through a magnetic material with a high magnetic permeability.

Next, for production of a magnet, a magnetic powder is mixed with an organic resin such as a thermosetting or thermoplastic resin and, when required, with additives, by a mixer.

The mixture of the magnetic powder and the resin is heated in an extrusion machine, and becomes molten. Then, in this state, it is sent to the raw material injection section 106 of the die for an extrusion moulding.

The molten material of the magnetic powder and the resin is gradually converged while it is being passed through the raw materials packing space 107 in the die to mould the final shape. The magnetic powder is orientated in the orientation section 108, and it is moulded in this state of orientation by a solidification with cooling in the orientation section 108.

Next in Table 1, results of measurements of temperature difference between X and Y points in the orientation section 108 are shown when the orientation section 108 is formed by a layer structure with materials selected from at least two different materials, namely,
- SKD 61 :: JIS G 4404 specification, steel material
- SKD 11 :: JIS G 4404 specification, steel material
- Si02 :: oxide of silicon
- PES :: polyethersulphone resin
for the structure of the orientation section of a die for an extrusion moulding.

The total length of the orientation section 108 is 6mm, and the temperature differences represent temperature differences between points X and Y which are 0.5 mm from the two ends of the orientation section 108, respectively and are 3mm outside from the passage of a molten mixture of the magnetic powder and the resin. (In the measurement, the temperature at point Y was fixed at 323K (50°C)).

A heater with a 800W capacity was used for heating, and a cooling plate operated by water cooling was installed at the surface of the outlet of the orientation section 109 to cool the orientation section 108.

The structure column in Table 1 shows the materials used for the front end structure, and among them, SKD 61 and SKD 11 are magnetic materials and the remainder - SiO₂ and PES are non-magnetic materials.

Further the length of each layer is 6/A [mm]. (A means numbers of the layer.)

As shown in Table 1, in case of Comparative Test 1 in which the orientation section was formed by a single metal, a temperature difference of only 293K (20°C) was obtained with the aforementioned system.

Although it was the same material, the temperature gradient was however able to be achieved by forming the layer structure.

This was because the contact surface resisted the heat transfer by forming the layer structure. This was also proved by Test 1 and Test 4.

Further as it was understood from Tests 3, 5 and 6, a further high temperature gradient was attainable by using a material of low thermal conductivity for a partial section of the orientation section.

However, in this case, since a magnetic material has, in general, high thermal conductivity, a non-magnetic material becomes suitable for the material used in the partial section.

Next, Table 1 also shows magnetic performance of magnets moulded by the dies having structures as described above.

The magnets were produced by following process.

For the magnets produced here, a magnetic alloy having a coercive force of approximately 5.57x10⁵ A/m (7 kOe) having a basic magnetic powder composition of Sm (Co 0.672 Cu 0.08 Fe 0.22 Zr 0.028) 8.35 was crushed into particles of the average particle size of approximately 20 µm, and they were mixed with a resin. A ratio of the magnetic powder and the resin was magnetic powder 60% by vol and resin 40% by vol.

A thermosetting resin mainly comprising an epoxy resin was used as the organic resin.

The aforementioned mixture was kneaded by a roller mill, a compound was prepared, then the compound was coarsely crushed, and it was charged in a screw type extrusion machine. The crushed compound was heated in the extrusion machine.

The thermosetting resin mainly comprising the epoxy resin had its thermoplastic region at approximately 373 - 423K (100 - 150°C) at which the viscosity remarkably dropped, the mixture of the magnetic powder and the resin was in a molten state in this temperature region. The mixture was pushed into a die by the screw, and a magnet was extruded from the die by a solidification with cooling after orientating the magnetic powder in the orientation section at the front end of the die. The shape of the moulded magnet was ring shaped with the outer diameter 32.8 mm and the inner diameter 31.8 mm.

In this Example, the magnetic performance was measured by using an uncured state magnet moulded in a molten state.

As it is clear from Table 1, the moulded magnet showed an improved performance in the case of a die structure by which the temperature gradient was secured, and it was also confirmed that the dimensional accuracy was improved by having the temperature gradient as well.

**Table 1**

| Code | Structure | Temp difference [K] | Magnetic Performance Br [T] | BH max [KJ/m³] | Dimension Accuracy |
|---|---|---|---|---|---|
| Test 1 | SKD61/SKD61 | 30 (°C) | 0.554(5.54kG) | 50.1 (6.3 MGOe) | C |
| Test 2 | SKD61/SKD11 | 35 (°C) | 0.560(5.60kG) | 51.7 (6.5 MGOe) | C |
| Test 3 | SDK61/Si02 | 70 (°C) | 0.562(5.62kG) | 51.7 (6.5 MGOe) | B |
| Test 4 | SKD61/SKD11/SKD61 | 40 (°C) | 0.595(5.95kG) | 55.7 (7.0 MGOe) | C |
| Test 5 | SKD61/Si02/SKD61 | 100 (°C) | 0.615(6.15kG) | 63.7 (8.0 MGOe) | A |
| Test 6 | SKD61/PES/SKD61 | 150 (°C) | 0.630(6.30kG) | 67.6 (8.5 MGOe) | A |
| Comparative | SKD61 | 20 (°C) | 0.536(5.36kG) | 47.7 (6.0 MGOe) | D |
| A... excellent C... fair B... good D... bad | | | | | |

### EXAMPLE 2

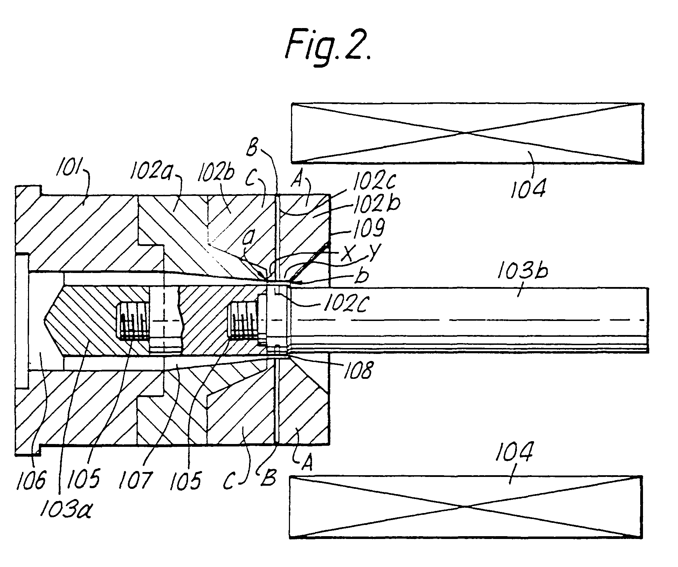

Figure 2 shows an outline drawing of a die for an extrusion moulding used in Example 2.

In the Figure, 102c shows a moulding section outer die comprising a material of a low thermal conductivity, a distance a-b shows a length of an orientation section 108, and an explanation of the other reference numerals is omitted because they are same as those shown in Figure 1.

The die for an extrusion moulding is similar in structure and effect to the die of Figure 1 except that a different material is inserted in the centre of the orientation section 108, and the orientation section 108 at the inner part of the die has a structure divided into 3 layers i.e. A, B and C as shown in Figure 2. In this case, layer B was a material of the inserted layer, and the same material i.e. SKS2 was used for layer A and layer C. SKS2 is a steel material specified by JIS G 4404 standard.

A temperature difference in the orientation section 108 showed a temperature difference between X and Y points shown as temperature measuring points in Figure 2.

The temperature differences between X-Y, when several materials were used for the layer B material inserted, are shown in Table 2. The length of the orientation section [the distance a-b in Figure 2] was 6mm, and the thickness of each layer was 2mm.

Comparative Test 2 was an example using a die in which the orientation layer was not constituted by the layer structure as shown in Figure 8.

As in Example 1, a heater with a 800W capacity was used for heating, and for cooling, a surface of the outlet of the die in layer C, 109 was cooled by water and the temperature at point Y was kept at 333K (60°C).

Next, cylindrical magnets of outer diameter 30mm and inner diameter 28mm were moulded in same basic composition and procedure as Example 1, by using the aforementioned die, and the magnetic performance of their magnets was compared.

In Table 2, the temperature difference between X and Y in the orientation section 108 and the magnetic performance of the magnet prepared are shown when the orientation section 108 was formed by using a material as an inserting material selected from,
- PES :: polyesthersulphone resin
- PEEK :: polyetheretherketone resin
- Zr0₂ :: oxide of zirconium
- YHD50 ;: steel material (a Hitachi Metal Product) and
- SKD61 :: steel material specified by JIS G 4404
which had different thermal conductivities,

Test 7-11 and Comparative Test 2 were cases when a resin mainly comprising an epoxy resin was used, and the extrusion condition was that the extrusion was made by keeping the temperature at point Y at 333K (60°C) as described above. The temperature was a temperature at which the resin used was solidified, and the shape of the moulded magnet did not deform.

On the other hand, for the Test 8a-11a and Comparative Test 2a, a polyamide resin (Nylon 12) was used, and in this case, the extrusion was made by keeping the temperature at Y point at 433K (160°C).

An example, which corresponds to Test 7 i.e. PES is used as a material to make the inserted layer, is not shown in Table 2, and this is due to an impossibility of the application because of a poor heat resistance of PES.

As shown in Table 2, the cases, in which materials of low thermal conductivity were inserted, uniformly exhibited better magnetic performance than Comparative Test 2 and 2a in which the orientation section was formed by only a single metal SKD61. However, when the material inserted has the thermal conductivity (at 293K(20°C)) above 4.2W/mK (0.01 [cal/cm sec °C]), the improvement on the magnetic performance is slight, and it is preferable to insert a material having the thermal conductivity of 4.2W/mK (0.01 [cal/cm sec °C]) or less.

**Table 2**

| Code Material Inserted | Thermal Conductivity [W/mK] | Temp Difference [K] | Magnetic Br[T] | Performance (BH) max [KJ/m³] |
|---|---|---|---|---|
| Test 7 PES | 0.191 | 105(°C) | 0.630 (6.30kG) | 67.6 (8.5 MGOe) |
| | (4.54 x 10⁻⁴ cal/cm sec °C) | | | |
| " - - | - | - | - | - |
| " 8 PEEK | 0.251 | 100(°C) | 0.628 (6.28kG) | 66.8 (8.4 MGOe) |
| | (5.97 x 10⁻⁴ cal/cm sec °C) | | | |
| " 8a | " | | 0.627 (6.27kG) | 66.8 (8.4 MGOe) |
| " 9 ZrO₂ | 2.94 | 80(°C) | 0.618 (6.18kG) | 64.5 (8.1 MGOe) |
| | (0.007 cal/cm sec°C) | | | |
| " 9a " | " | | 0.615 (6.15kG) | 63.7 (8.0 MGOe) |
| " 10 YHD50 | 15.96 | 40(°C) | 0.565 (5.65kG) | 52.5 (6.6 MGOe) |
| | (0.038 cal/cm sec°C) | | | |
| " 10a " | " | | 0.557 (5.57kG) | 50.9 (6.4 MGOe) |
| " 11 SKD61 | 30.66 | 30(°C) | 0.560 (5.60kG) | 50.9 (6.4 MGOe) |
| | (0.073 cal/cm sec°C) | | | |
| " 11a " | " | | 0.550 (5.50kG) | 50.1 (6.3 MGOe) |
| Comparative | | | | |
| Test 2 - | 30.66 | 25(°C) | 0.536 (5.36kG) | 47.7 (6.0 MGOe) |
| | (0.073 cal/cm sec°C) | | | |
| " 2a - | " | | 0.534 (5.34kG) | 47.7 (6.0 MGOe) |

### EXAMPLE 3

Next, an effect to a magnet, when the thickness of the non-magnetic material to be inserted in the orientation section in Figure 1 was varied, was investigated.

PEEK was used as the material to be inserted, the length of the orientation section including the thickness of PEEK was always kept at 6mm, layer A and layer C were made as the same length, and a cooling capacity was adjusted to keep the temperature at point Y always at 433K (160°C). Further as for a resin to be mixed with a magnetic powder, polyamide resin (Nylon 12) was used, and a moulding process and a shape of the moulded magnet were same as the aforementioned Example 2.

In Table 3, the temperature difference between X-Y and magnetic performance are shown when the thickness of layer B was varied from 0.5 to 3.5mm. (Test 12 - 16).

As it is clear from Table 3, the temperature difference is saturated at the PEEK thickness of 2mm with the heater capacity used. Since the thermal conductivity of PEEK is extremely low, a temperature difference of around 353K (80°C) is attained even at the PEEK thickness of 0.5 mm.

Further as understood from Table 3, when the PEEK thickness becomes 3 mm (1/2 of the length of the orientation section) or more, the magnetic property drops remarkably, though the temperature difference between X - Y is large. This is due to a disorder of a magnetic field in the orientation section by entering a non-magnetic material into the orientation section. Similarly even when the PEEK thickness is 1mm or less, it is seen that the magnetic performance is somewhat improved in spite of a reduced temperature difference.

Although the temperature difference drops if the thickness of a non-magnetic layer becomes thin, it is observed that the magnetic performance is somewhat improved because of a decrease of the disorder of the magnetic field in the orientation section.

Based on these observations, it is preferable that the non-magnetic layer should be as thin as possible to secure a sufficient temperature difference, and from the results of Table 3, it is preferable that it is 1/2 or less of the length of the orientation length when a non-magnetic material is inserted.

**Table 3**

| | Thickness of Layer B [mm] | Temperature Difference [K] | Magnetic Property Br [T] | (BH) max [KJ/m³] |
|---|---|---|---|---|
| Test 12 | 3.5 | 105 (°C) | 0.554(5.54kG) | 50.1 (6.3 MGOe) |
| Test 13 | 3.0 | 102 (°C) | 0.595(5.95kG) | 55.7 (7.0 MGOe) |
| Test 14 | 2.0 | 100 (°C) | 0.628(6.28kG) | 66.8 (8.4 MGOe) |
| Test 15 | 1.0 | 92 (°C) | 0.632(6.32kG) | 67.6 (8.5 MGOe) |
| Test 16 | 0.5 | 85 (°C) | 0.630(6.30kG) | 67.6 (8.5 MGOe) |

### EXAMPLE 4

Next, in a die for an extrusion shown in Figure 1, the length of the orientation section 108 of the die was varied, and magnets were produced by an extrusion moulding similar to Example 1.

In this example, the magnetic powder and the polyamide resin were however mixed to make the volume ratio of the magnetic powder and the resin 3:2. The magnetic field was made by supplying a 200A current to a 123 turn coil, and the shape of the moulded magnet by extrusion was cylindrical with the outer diameter 30mm and the inner diameter 28mm.

The magnetic fields for the orientation at the orientation section when the length of the orientation section 108 was varied, are shown in Table 4 together with the magnetic property of the magnets extruded.

In this example, with regard to the temperature of the orientation section X and Y points, a heating and cooling was applied from both ends of the orientation section to make point Y always at 433K (160°C) and X always at 4523K (250°C). However in case of the length at 5mm, the temperature at point X was 513K (240°C), and it was not possible to get 523K (250°C). The shape of the magnet moulded had a d²/2D value of approximately 13mm.

**Table 4**

| | Length [mm] | Magnetic Field [10⁵A/m] | Magnetic Performance Br [W/m²] | (BH) max [KJ/m³] |
|---|---|---|---|---|
| Test 17 | 25 | 3.98(5.0kOe) | 0.370(3.70kG) | 21.5 (2.7 MGOe) |
| Test 18 | 15 | 7.40(9.3kOe) | 0.493(4.93kG) | 43.8 (5.5 MGOe) |
| Test 19 | 13 | 8.83(11.1kOe) | 0.595(5.95kG) | 59.7 (7.5 MGOe) |
| Test 20 | 10 | 10.6(13.3kOe) | 0.615(6.15kG) | 63.7 (8.0 MGOe) |
| Test 21 | 5 | 11.9(15.0kOe) | 0.612(6.12kG) | 62.9 (7.9 MGOe) |

From Table 4, the magnetic performance of the magnet drops severely when the length of the orientation section exceeds in 13mm. This is because of the impossibility of providing a sufficient orientation of the magnetic powder due to the increase of the length of the orientation section resulting in a low magnetic field at the orientation section.${\text{1 < d}}^{\text{2}} \text{/ 2D}$

The above equation is an modified equation of the condition in which the orientation of the radial factor is sufficient i.e.${\text{fR = 2Dh / D}}^{\text{2}} \text{< 1,}$ by replacing h with *l*, and the results obtained almost have an agreement with the equation of (1). In the case of a radial magnetic field moulding by a press and an injection, there is a limitation on the height at around 13mm for the moulded magnet, but there is no such limitation on the magnet height in case of the extrusion moulding, and it was possible to produce a magnet with a sufficient radial orientation even if its height was several tens of mm.

### EXAMPLE 5

Next a similar test to Example 4 was carried out by using the die shown in Figure 2.

As to the die shown in Figure 2, as similar to Example 2, the orientation section 108 of the die is divided into 3 layers of layer A 102b, layer B 102c and layer C 102b. Layer B is a non-magnetic material PEEK of 0.5 mm thickness, and it has a structure that 102c of layer B comprising a different material is inserted in the centre of the orientation section 108. 102b of layer A and layer C is a magnetic material, and a sum of these lengths is 1'. Layer A and layer C were made as always the same thickness.

The magnetic field for the orientation and the change of the magnet performance when the magnets were moulded by varying the length 1' were examined, and the results were shown in Table 5.

The magnetic field for the orientation was a result observed at a passage which contacted with layer A 102b, and the shape of the moulded magnet was a ring of the outer diameter 25mm and the inner diameter 23mm.

**Table 5**

| | 1' [mm] | Magnetic Field [10⁵A/m] | Magnetic Performance | |
|---|---|---|---|---|
| | | | Br [T] | (BH) max |
| | | | | [KJ/m³] |
| Test 22 | 18 | 2.39(3.0kOe) | 0.368(3.68kG) | 21.5 (2.7 MGOe) |
| 23 | 15 | 3.98(5.0kOe) | 0.373(3.73kG) | 21.5 (2.7 MGOe) |
| 24 | 11 | 7.32(9.2kOe) | 0.490(4.90kG) | 43.8 (5.5 MGOe) |
| 25 | 10 | 8.35(10.5kOe) | 0.602(6.02kG) | 62.1 (7.8 MGOe) |
| 26 | 8 | 10.3(13.0kOe) | 0.628(6.28kG) | 67.6 (8.5 MGOe) |
| 27 | 5 | 11.9(15.0kOe) | 0.630(6.30kG) | 67.6 (8.5 MGOe) |
| 28 | 3 | 12.1(15.2kOe) | 0.622(6.22kG) | 66.1 (8.3 MGOe) |

The temperatures at points X and Y were 433K (160°C) and 553K (280°C) respectively. The temperature at point Y was raised when compared with Example 4, and this was due to a heat insulation effect between layer A- C by the insertion of PEEK in layer B resulting in the securing of the temperature difference.

The magnets produced herewith had${\text{d}}^{\text{2}} \text{/ 2D = 10.6 [mm].}$

Even on the results of Table 5 when *1*' becomes 10.6 mm or more, the magnetic performance of the magnet produced drops remarkably in a similar manner to Example 4. When it becomes 10.6 mm or less, it shows a value at which is considered that the radial orientation is almost sufficient. The magnetic property is improved more than in Example 4, and this is due to a further decrease of the resin viscosity at X point when compared with Example 4 because of the security of the temperature gradient between X - Y by the heat insulation effect of layer B. When the length of a magnetic material in the orientation section, i.e. the length of *1*' in which a magnetic filed is charged to a magnetic powder, satisfies$\text{1} {\text{' < d}}^{\text{2}} \text{/ 2D,}$ a magnet with a sufficient radial orientation can be formed.

### Example 6

A magnetic powder having the same basic composition to Example 4 was mixed with a resin mainly comprising an epoxy resin to make a volume ratio of the magnetic powder and the resin 3:2, a magnet was moulded by an extrusion from a die, and then the moulded magnet was heated in an oven to cure it.

A die used in this example is shown in Figure 3. Namely in this example it is constituted by divided sections in the following order - a converging section 111, a heat insulating section 112, a heating section 113 and an orientating section 110 from a connecting section of the extrusion machine to an outlet of the orientation section. X, Y and Z are temperature measuring points.

A compound extruded from an extrusion machine is converged at the converging section 111. The compound is further heated in the heating section 113 after passing through the heat insulating section 112, the magnetic powder is orientated in the orientating section 110 and a magnet is moulded in this state of orientation by a solidification with cooling.

Next as a Comparative Example, a die is used in which there is no heat insulating section 112, and no distinction between the converging section 111 and the heating section 113, but the remainder is the same as the die of Figure 3.

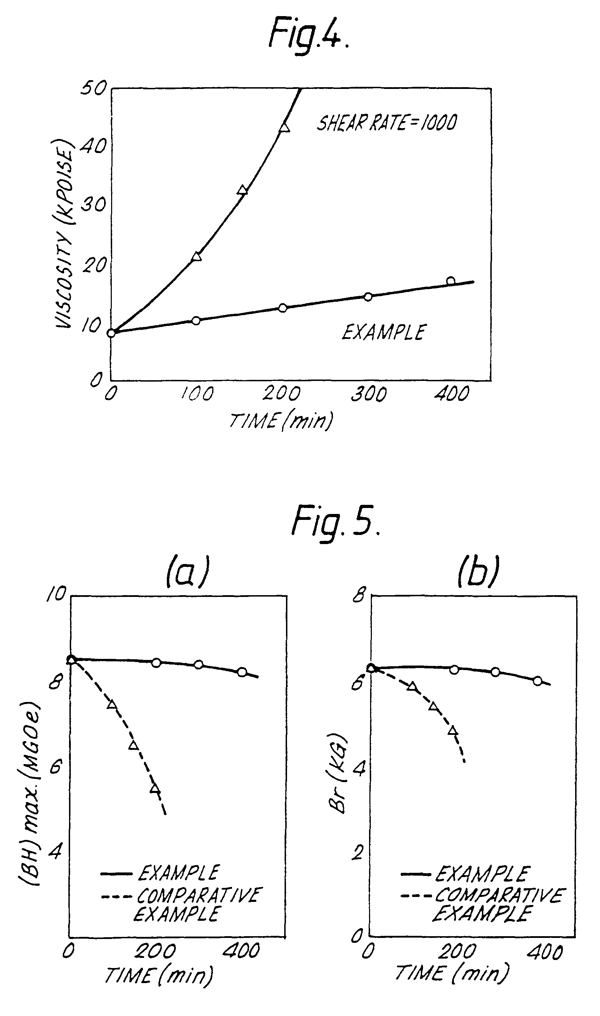

A change of the compound viscosity, when these dies are used, is shown in Figure 4.

The viscosity herewith measured is a value at 393K (120°C) of a crushed material of an uncured magnet extruded through the die after charging in an extrusion machine.

In the graph, the x-axis represents time in minutes, with t = 0 being when the charged compound first comes out from the die and magnets are subsequently sampled, and their viscosities are measured.

The temperatures of the die at points X, Y and Z were 333K (60°C), 423K (150°C) and 393K (120°C) respectively, the temperatures of the die of the Comparative Example at points X, Y and Z were 333K (60°C), 423K (150°C) and 433K (160°C), and the extrusion speed of the magnet was 1mm/sec.

As is shown in Figure 4, in which the measured points of the Comparative Example are indicated by triangles (as in fig. 5) the compound viscosity increases greatly with the passage of time in the case that the die of the Comparative Example is used. It is considered that this was due to an initiation of curing of a part of the resin because of heating of the compound extruded from the extrusion machine at 433K (160°C). When the operation time exceeded over 4 hours, extrusion moulding was not able to be continued. On the contrary in case of the die of Example 6, the section where it was heated at 423K (150°C) was small resulting in only slight change of the viscosity with time.

A change of the magnetic performance when these dies were used, is shown in figure 5 (a) and (b). The time along the axis of the abscissa is the same as Figure 4. As it is clear from Table 5, the magnetic performance suddenly drops with the passage of time in the case of Comparative Example. This was due to a decrease of degree of the orientation since the magnetic powder in the compound became difficult to orientate due to the elevation of the compound viscosity with time resulting in a drop of the magnetic performance.

On the other hand, in the case of the Example 6, almost no change of the magnetic performance with time is observed, and a high magnetic performance is attained stably.

## Claims

1. A die for the extrusion moulding of a resin bonded magnet in which a molten mixture of a magnetic powder and a resin is solidified with cooling, in which a magnetic powder is orientated by a magnetic field applied in a layered orientation section (108, 110) during a moulding process, said orientation section being located at a front end of the die, and comprising a layer of magnetic material, **characterised in that**: the orientation section comprises at least an outer layer (A), a central layer (B) and an inner layer (C); the central layer (B) has a thermal conductivity lower than the thermal conductivity of the outer layer (A) and the inner layer (C); the central layer (B) has a thermal conductivity at 293K of 4.2W/mK or less; the outer layer (A) comprises a magnetic material; and the inner layer (C) comprises a magnetic material.

2. A die for extrusion moulding as claimed in claim 1, wherein the layer (B) comprises a non-magnetic material having an operative length which is half or less of the said operative length of the orientation section.

3. A die according for the extrusion moulding as claimed in claim 1 or 2, wherein the die has a passage for the molten mixture in the orientation section (108,110), the passage having an inner diameter and an outer diameter.

4. A die for extrusion moulding as claimed in claim 3, wherein the operative length of the orientation section (108,110) is less than the square of the inner diameter divided by twice the outer diameter.

5. A die for extrusion moulding as claimed in claim 3, wherein the operative length of the orientation section (108,110) excluding the non -magnetic material is less than the square of the inner diameter divided by twice the outer diameter.

6. A die for the extrusion moulding of a resin bonded magnet in which a molten mixture of a magnetic powder and a resin is solidified with cooling, in which a magnetic powder is orientated by a magnetic field applied in a layered orientation section (108,110) during a moulding process, said orientation section being located at a front end of the die, and comprising a layer of magnetic material **characterised in that**: the orientation section comprises at least an outer layer (A) and an inner layer (B); the inner layer (B) has a thermal conductivity lower than the thermal conductivity of the layer (A); the inner layer (B) has a thermal conductivity at 293K of 4.2W/mK or less; and the outer layer (A) comprises a magnetic material.

## Patentansprüche

1. Düse zum Stranggießen eines mittels Kunstharz gebundenen Magneten, in der ein geschmolzenes Gemisch aus einem magnetischen Pulver und einem Kunstharz mittels Kühlung verfestigt wird, wobei ein magnetisches Pulver mittels eines in einem geschichteten Ausrichtungsabschnitt (108, 110) während eines Gießprozesses angelegten magnetischen Feldes ausgerichtet wird, wobei der Ausrichtungsabschnitt am Vorderende der Düse angeordnet ist und eine Schicht eines magnetischen Materials umfaßt, **dadurch gekennzeichnet, daß**: der Ausrichtungsabschnitt wenigstens eine Außenschicht (A), eine Zentralschicht (B) und eine Innenschicht (C) umfaßt; die Zentralschicht (B) eine Wärmeleitfähigkeit aufweist, die kleiner ist als die Wärmeleitfähigkeit der Außenschicht (A) und der Innenschicht (C); die Zentralschicht (B) eine Wärmeleitfähigkeit bei 293 K von 4,2 W/mK oder weniger aufweist; die Außenschicht (A) ein magnetisches Material umfaßt; und die Innenschicht (C) ein magnetisches Material umfaßt.

2. Düse zum Stranggießen nach Anspruch 1, bei der die Schicht (B) ein nichtmagnetisches Material mit einer operativen Länge umfaßt, die gleich der Hälfte der operativen Länge des Ausrichtungsabschnitts oder weniger ist.

3. Düse zum Stranggießen nach Anspruch 1 oder 2, bei der die Düse einen Durchlaß für das geschmolzene Gemisch im Ausrichtungsabschnitt (108, 110) aufweist und der Durchlaß einen Innendurchmesser und einen Außendurchmesser aufweist.

4. Düse zum Stranggießen nach Anspruch 3, bei der die operative Länge des Ausrichtungsabschnitts (108, 110) kleiner ist als das Quadrat des Innendurchmessers dividiert durch das Zweifache des Außendurchmessers.

5. Düse zum Stranggießen nach Anspruch 3, bei der die operative Länge des Ausrichtungsabschnitts (108, 110) ausschließlich des nichtmagnetischen Materials kleiner ist als das Quadrat des Innendurchmessers dividiert durch das Zweifache des Außendurchmessers.

6. Düse zum Stranggießen eines mittels Kunstharz gebundenen Magneten, in der ein geschmolzenes Gemisch aus einem magnetischen Pulver und einem Kunstharz mittels Kühlung verfestigt wird, wobei ein magnetisches Pulver mittels eines in einem geschichteten Ausrichtungsabschnitt (108, 110) während eines Gießprozesses angelegten magnetischen Feldes ausgerichtet wird, wobei der Ausrichtungsabschnitt am Vorderende der Düse angeordnet ist und eine Schicht eines magnetischen Materials umfaßt, **dadurch gekennzeichnet, daß**: der Ausrichtungsabschnitt wenigstens eine Außenschicht (A) und eine Innenschicht (B) umfaßt; die Innenschicht (B) eine Wärmeleitfähigkeit aufweist, die geringer ist als die Wärmeleitfähigkeit der Schicht (A), die Innenschicht (B) eine Wärmeleitfähigkeit bei 293 K von 4,2 W/mK oder weniger aufweist; und die Außenschicht (A) ein magnetisches Material umfaßt.

## Revendications

1. Matrice pour le moulage par extrusion d'un aimant stratifié en résine dans lequel un mélange fondu d'une poudre magnétique et d'une résine est solidifié par refroidissement, dans laquelle une poudre magnétique est orientée par un champ magnétique appliqué à une section d'orientation disposée en couches (108, 110) pendant un processus de moulage, ladite section d'orientation étant située à une extrémité avant de la matrice, et comprenant une couche de matière magnétique, **caractérisée en ce que** : la section d'orientation comprend au moins une couche extérieure (A), une couche centrale (B) et une couche intérieure (C) ; la couche centrale (B) a une conductivité thermique inférieure à la conductivité thermique de la couche extérieure (A) et de la couche intérieure (C) ; la couche centrale (B) a une conductivité thermique à 293 K de 4,2 W/mK ou moins ; la couche extérieure (A) comprend une matière magnétique ; et la couche intérieure (C) comprend une matière magnétique.

2. Matrice pour le moulage par extrusion selon la revendication 1, dans laquelle la couche (B) comprend une matière non magnétique ayant une longueur opérationnelle qui est la moitié ou moins de ladite longueur opérationnelle de la section d'orientation.

3. Matrice pour le moulage par extrusion selon la revendication 1 ou 2, dans laquelle la matrice a un passage pour le mélange fondu dans la section d'orientation (108, 110), le passage ayant un diamètre intérieur et un diamètre extérieur.

4. Matrice pour le moulage par extrusion selon la revendication 3, dans lequel la longueur opérationnelle de la section d'orientation (108, 110) est inférieure au carré du diamètre intérieur divisé par deux fois le diamètre extérieur.

5. Matrice pour le moulage par extrusion selon la revendication 3, dans lequel la longueur opérationnelle de la section d'orientation (108, 110) excluant la matière non magnétique est inférieure au carré du diamètre intérieur divisé par deux fois le diamètre extérieur.

6. Matrice pour le moulage par extrusion d'un aimant stratifié en résine dans lequel un mélange fondu d'une poudre magnétique et d'une résine est solidifié par refroidissement, dans laquelle une poudre magnétique est orientée par un champ magnétique appliqué à une section d'orientation disposée en couches (108, 110) pendant un processus de moulage, ladite section d'orientation étant située à une extrémité avant de la matrice, et comprenant une couche de matière magnétique, **caractérisée en ce que** : la section d'orientation comprend au moins une couche extérieure (A) et une couche intérieure (B) ; la couche intérieure (B) a une conductivité thermique inférieure à la conductivité thermique de la couche (A) ; la couche intérieure (B) a une conductivité thermique à 293 K de 4,2 W/mK ou moins ; et la couche extérieure (A) comprend une matière magnétique.
